# EUROPEAN PATENT APPLICATION

(11) **EP 2 000 783 A2**
(43) Date of publication of application: **10.12.2008**
(21) Application number: 06756674.5
(22) Date of filing: 29.05.2006
(51) Int. Cl.: G01F 1/00, G01F 1/34

(54) **SENSOR, PROGRAM STORAGE UNIT, CONTROL UNIT, AND PROGRAM STORAGE MEDIUM**

(30) Priority: 30.03.2006 JP 2006095658
(71) Applicant: Sunx Limited, Kasugai-shi, Aichi 486-0901 (JP)
(72) Inventor: YADA, Takanobu, Aichi 486-0901 (JP); FUJII, Takashi, Aichi 486-0901 (JP)
(74) Representative: Müller-Boré & Partner Patentanwälte
(86) International application number: PCT/JP2006/310629
(87) International publication number: WO 2007/116533

(57) **Abstract**

At a time of a teaching mode that is performed before conditions of a flow path where fluid flows, a pressure and a flow rate of the fluid are sampled. Also at a time of a detection mode to detect the conditions of the flow path, the pressure and the flow rate are sampled. Then, in a case where a difference between the flow rate in the teaching mode in the pressure obtained in the detection mode and the flow rate in the detection mode is larger than a predetermined value, it is determined that clogging has been caused in the flow path. A processing program for this case is selectively transmitted in advance from a processing program storage device 50 that stores a plurality of processing programs to the sensor 30.

## Description

### TECHNICAL FIELD

The present invention relates to a sensor, a program storage unit, a control unit, and a program storage medium.

### BACKGROUND ART

A physical quantity detection apparatus, or a sensor, that detects physical quantity such as a pressure or a flow rate and performs switching operation is conventionally known.

The sensor of this type is provided with a detection device for outputting a detection signal that depends on the physical quantity of a detected object and a CPU for processing the detection signal from the detection device. The CPU, based on the detection signal outputted from the detection device, performs processing such as predetermined operation or determination using a processing program that meets a detection principle for the physical quantity and the like. Detection of the physical quantity and the switching operation is thus performed.

Therefore, in order that a single sensor can detect a plural kinds of physical quantities that are completely different such as the pressure and the flow rate, it needs to be provided with all processing programs that meet physical quantities that have potential to be detected.

### DISCLOSURE OF THE INVENTION

In order to be provided with all processing programs that meet physical quantities that have potential to be detected, however, the sensor needs to have a storage device that can store all processing programs. Moreover, a work to write all processing programs in the storage device is necessary, which is undesirable in view of manufacturing cost.

The present invention was completed based on the circumstances as above, and its purpose is to provide a sensor and the like that can execute processing that meets a detected object without a plurality of processing programs stored in advance.

In order to achieve the above purpose, a sensor in accordance with the present invention includes a detection device that outputs a detection signal that depends on a physical quantity of a detected object, a storage device capable of storing a processing program, and an operation device that executes processing in accordance with the processing program and based on a detection signal that is outputted from the detection device. The storage device includes the processing program wrote therein, the processing program being selected from a plurality of various processing programs.

Note that the "physical quantity" of the detected object is a quantity based on kind (category), classification, or the like of the detected object. The physical quantity is, for example, material, pressure, capacitance, flow rate, stress, position, distance, velocity, acceleration, temperature, humidity, hardness, shape, vibration quantity (number), weight, gas volume, gaseous species, electromagnetic quantity (intensity), odor, and the like.

While different "physical quantities" are included depending on the kinds (categories) of the detected object, being not limited to this, different "physical quantities" are included depending on the materials which are identical in kind (category). For example, in a case where the kind (category) of the detected object is pressure and the materials are different such as argon, nitrogen, and carbon dioxide, different physical quantities are included depending on the materials.

Furthermore, the aforesaid processing program is not limited to a program that executes processing that meets the physical quantity of the detected object; it may be also a processing program on kind of language. The kind of language includes not only the kind of the language itself such as Japanese language or English language; it may include kind of systems of unit. For example, in a case where there is a country such as Japan where "kPa (kilopascal) " is adopted as the kind of language for pressure unit and a country such as United States of America where "bar" is adopted, the kind of systems of unit is included in the kind of the language.

In accordance with the present invention, a processing program selected from a plurality of different processing programs is wrote in the storage device, and thereby the operation device is allowed to execute the processing of detected signals outputted from the detection device in accordance with the processing program. Therefore, though a required processing program is not provided in advance, the required processing program can be written when the requirement arises, and thereby the processing that meets the detected object can be performed. Furthermore, since it is unnecessary for the sensor to be provided in advance with all processing programs that have potential to be required, storage capacity that is necessary to store the processing program in the storage device can be reduced.

Note that a preferable aspect of the sensor in accordance with the present invention is to be configured by a head unit that includes the detection device and a control unit that includes the operation device. The sensor can be configured such that fluid is taken as the detected object, and the sensor detects the condition in the flow path of the fluid based on the pressure, the flow rate, and the temperature of the fluid. In this case, the processing program can have the operation device execute processing to detect the condition of the flow path based on a comparison of sampling data with detection data. The sampling data shows a relation between the pressure, the flow rate, and the temperature of the fluid. The sampling data is obtained by sampling of the pressure, the flow rate, and the temperature of the fluid before the condition of the flow path is detected. The detection data shows a relation between the pressure, the flow rate, and the temperature of the fluid when the condition is detected. Furthermore, in the above aspect, the processing program may have the operation device execute the processing to detect the condition of the flow path based on a comparison of a gradient between the pressure, the flow rate, and the temperature of the fluid in the sampling data with a gradient between the pressure, the flow rate, and the temperature of the fluid in the detected data.

### BRIEF DESCRIPTION OF THE DRAWINGS

Fig. 1 is a perspective view showing detection by a sensor with a schematically shown partial section;
Fig. 2 is a block diagram of the sensor and a program storage unit;
Fig. 3 is a figure showing correspondence between a plurality of processing programs, which are stored in a program storage unit, and a detected object;
Fig. 4 is a graph explaining about detection processing for clogging;
Fig. 5 is a flowchart of a time of teaching;
Fig. 6 is a flowchart of a time of detecting;
Fig. 7 is a graph for explaining about detection processing for the clogging of a second embodiment;
Fig. 8 is a flowchart of the time of teaching;
Fig. 9 is a flowchart of the time of detecting;
Fig. 10 is a graph explaining about detection processing for clogging of a third embodiment;
Fig. 11 is a flowchart of the time of teaching;
Fig. 12 is a flowchart of the time of detecting;
Fig. 13 is a graph explaining about detection processing for clogging of a fourth embodiment;
Fig. 14 is a flowchart of the time of teaching;
Fig. 15 is a flowchart of the time of detecting;
Fig. 16 is a graph explaining about detection processing for clogging of a fifth embodiment;
Fig. 17 is a flowchart of the time of teaching; and
Fig. 18 is a flowchart of the time of detecting.

### Explanation of Numerals

10 ... a sensor
21 ... a pressure sensor head (a detection device)
22 ... a flow rate sensor head (the detection device)
23 ... a pressure detecting portion
24 ... a temperature detecting portion (the detection device)
30 ... a control unit
31 .... an operation device
33 ... a CPU
35 ... a storage device
36 ... a mode changeover switch
37 ... a display device
38 ... a network I/F (an external program input device)
39 ... an operating portion
50 ... a program storage unit
51 ... a readout device
52 ... a program storage device
54 ... a display panel
55 ... an operating portion

### BEST MODE FOR CARRYING OUT THE INVENTION

### <First Embodiment>

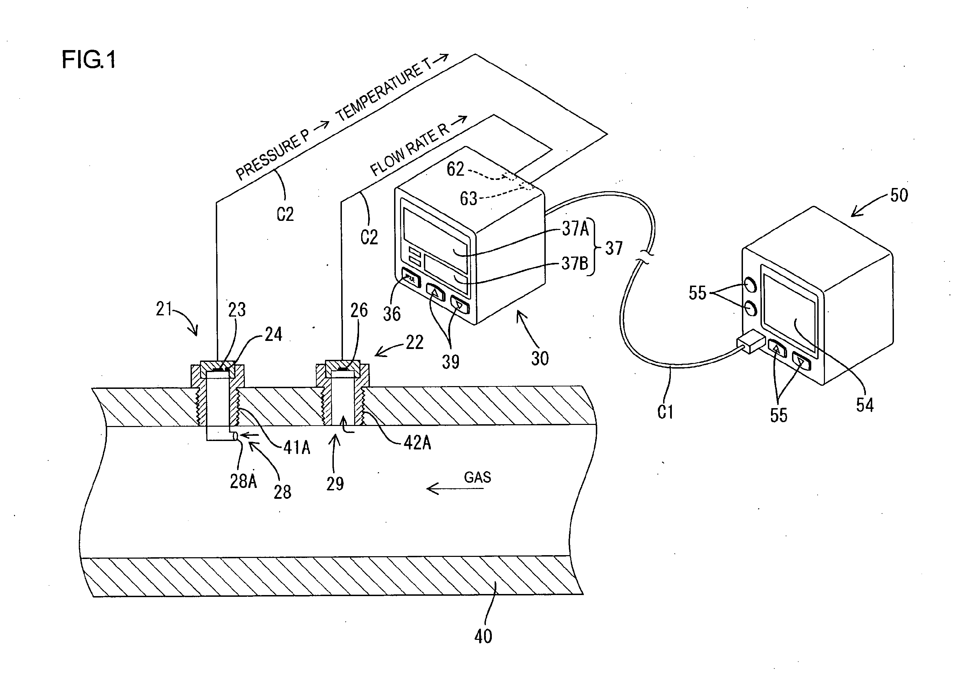

A first embodiment in accordance with the present invention will be explained with reference to Figs. 1 through 6.

A sensor 10 of this embodiment detects clogging that is caused in a pipe 40. The detection is performed based on a variation in pressure or flow rate in a flow path such as the pipe 40 where fluid such as gas or liquid flows.

### 1. Configurations of Sensor

As shown in Fig. 1, the sensor 10 is provided with a pressure sensor head 21 (that corresponds to a "head unit" of the present invention), a flow rate sensor head 22 (that corresponds to the "head unit" of the present invention), and a control unit 30. The pressure sensor head 21 detects the pressure of the gas in the flow path. The flow rate sensor head 22 detects the flow rate of the gas in the flow path. The control unit 30 is connected via communication cables C2 and the like to the sensor heads 21, 22.

The back face side of the control unit 30 is provided with a plurality of connector portions 62, 63 and a connector. The connector portions 62, 63 are connectable to a plurality of the communication cables C2 for each of the detected objects in a case where the detected objects are different. The connector is connected to a program storage unit 50, which will be explained below. The communication cables C2 are connected to the sensor heads 21, 22 each, and ends of the communication cables C2 are fitted in the connector portions 62, 63. Transmission of data is thus available between the sensor heads 21, 22 and the control unit 30.

The pressure sensor head 21 is fixed in a support hole 41A of the pipe 40. The pressure sensor head 21 is provided with a pressure inlet port 28 and a pressure-detecting portion 23 (that corresponds to a "detection device" of the present invention). The pressure inlet port 28 has an inlet opening 28A oriented to the opposite side of a moving direction of the fluid in the pipe 40. The pressure-detecting portion 23 is in communication with the pressure inlet port 28, and outputs a detection signal that depends on the pressure of the fluid. The pressure-detecting portion 23 is configured by pressure-sensitive elements employing semiconductor diaphragm.

Note here that the detection of the pressure at the pressure-detecting portion 23 is influenced by the ambient temperature. Therefore, a temperature-sensing portion 24 (that corresponds to the "detection device" of the present invention) including thermistors and the like is one packaged near the pressure-detecting portion 23. They are disposed in the pressure sensor head 21. Thus, in addition to the detection signals (analogue signals) that depend on the pressure from the pressure-detecting portion 23, detection signals (analogue signals) that depend on the temperature from the temperature-sensing portion 24 are supplied to the control unit 30. When the detection signals from the sensor heads 21, 22 are provided to the control unit 30, the pressure detected at the pressure-detecting portion 23 is corrected according to the temperature detected at the temperature-sensing portion 24 to obtain a value. The value is detected as the pressure of the gas (fluid) in the flow path.

The flow rate sensor head 22 is fixed in a support hole 41B of the pipe 40. A flow rate sensing portion 26 (that corresponds to the "detection device" of the present invention) outputs the detection signals (analogue signals) that depend on the flow rate of the gas in the flow path to the control unit 30.

The flow rate sensor head 22 is provided with a flow rate inlet port 29 for the fluid. The flow rate inlet port 29 opens in a direction crossing the flow path where the fluid flows. The larger the flow rate of the fluid is, the higher the pressure of the fluid flowing into the flow rate inlet port 29 is. Therefore, the flow rate sensing portion 26 outputs the detection signals depending on the pressure of the fluid flowing into the flow rate inlet port 29, and thereby the flow rate of the gas flowing in the pipe is detected. Note that the flow rate sensor (the flow rate sensing portion 26) does not have to be a one that detects the flow rate based on the pressure of the fluid. For example, a flow rate sensor of another type such as thermal type, electromagnetic type, mechanical type, or the like may be used.

Furthermore, the control unit 30 has a mode changeover switch 36, a display device 37, and an operating portion 39 on a front face thereof. The mode changeover switch performs a mode changeover, which will be explained below. The display device 37 is formed with LCDs, 7-segment LEDs, and the like. The operating portion 39 can be operated by the user.

The operating portion 39 can perform up-down switches that can changeover displayed contents in the display device 37, direction to start teaching in a teaching mode and to start detecting operation in a detection mode, which are explained below.

The mode changeover switch 36 performs the changeover between the teaching mode and the detection mode. The teaching mode is performed before the detected object is detected. In the teaching mode, the pressure, flow rate, and the like of the detected object are sampled. In the detection mode, detection of clogging is performed based on the information on the pressure and flow rate obtained in the teaching mode. By pushing the mode changeover switch, changeover between the teaching mode and the detection mode is performed.

The display device 37 is configured by a first display section 37A and a second display section 37B that display a result of measurement, a threshold value for detection, and the like. While the first display section 37A displays the pressure of the detected object, the second display section 37B displays the flow rate of the detected object.

These display display a numeric value that is transformed in accordance with a set unit of the detected object. For example, where the set unit is "Pa (pascal)" and "kPa (kilopascal)", the numeric values transformed by a CPU 33 into the different numeric values that meet these units each are displayed.

Note that the displays in the first display section 37A and the second display section 37B can be changed to other displays. For example, when presence or otherwise of an object body is detected, the second display section 37B can indicate a threshold value.

The displays can be likewise other ones such that a numeric value such as the pressure, the flow rate, or the temperature of the detected object is transformed into a value in accordance with the set unit by the CPU 33 and displayed in the first display section 37A, while the unit of the numeric value displayed in the first display section 37A (units such as "Pa", "kPa", "bar", "mmHg (millimeter Hg)", "inHg (inch Hg)", "kgF/cm2 (kilogram-force/square centimeter)", or "PSI" for the pressure, °C (degree centigrade) or F (Fahrenheit) for the temperature, and l/min, l/sec/, ml/min for the flow rate) is displayed in the second display section 37B.

### 2. Electric Configurations of the Sensor

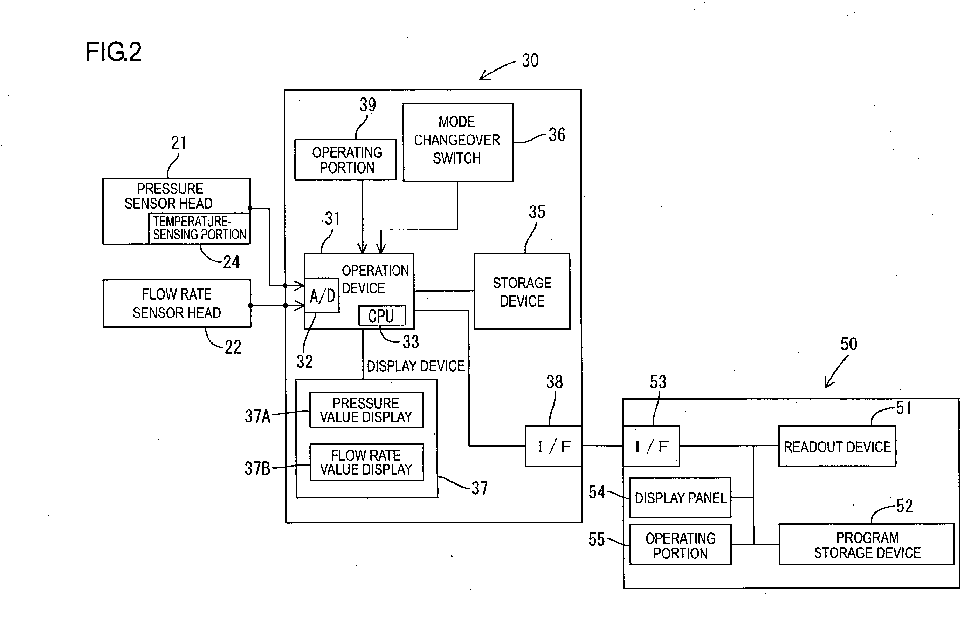

Electric configurations of the sensor 10 of this embodiment will be hereinafter explained with reference to Fig. 2.

The control unit 30 is provided with the mode changeover switch 36, a storage device 35, an operation device 31 (including the CPU33), the display device 37A, 37B, and a network I/F 38 (that corresponds to an "external program input device" of the present invention). The mode changeover switch 36 performs the mode changeover. The storage device 35 can store a processing program. The operation device 31 executes processing in accordance with the processing program and based on the inputted detection signals. The network I/F 38 inputs information from external and writes it in the storage device 35 via the CPU 33.

The storage device 35 is configured by a flash memory where information can be freely rewritten (written and erased). The flash memory does not lose data even when power source is turned off.

The operation device 31 is provided with an A/D converter 32 and the CPU 33. The A/D converter converts the detection signals from the pressure sensor head 21 and the flow rate sensor head 22 into digital signals. The digital signals from the A/D converter 32 are inputted to the CPU 33.

The network I/F 38 is connected via a communication cable C1 to the program storage unit 50. Stored in the program storage unit 50 are a plurality of processing programs, which will be explained below. The network I/F 38 thus receives the information (the processing program) from the program storage unit 50, and the processing program in the program storage unit 50 is written in the storage device 35.

The operation device 31 receives each of the detection signal outputted from the pressure sensor head 21 and the detection signal outputted from the flow rate sensor head 22. These detection signals (the analogue signals) are converted by the A/D converter 32 into the digital signals, and supplied to the CPU 33. Then, the CPU 33 executes the processing in accordance with the processing program stored in the storage device 35 and based on the inputted detection signals.

Note here that the detection signals outputted from the pressure sensor and the flow rate sensor are information on volume of the physical quantities. In order to display the information actually in the display device 37 as the pressure and the flow rate, it is necessary for the physical quantities to be recognized as numeric values in accordance with the kinds (categories) of the detected object. For example, the physical quantity from the pressure sensor requires a processing program so that the CPU 33 recognizes it as a numeric value of the pressure, while the physical quantity from the flow rate sensor requires a processing program so that the CPU 33 recognizes it as a numeric value of the flow rate.

Furthermore, there is a case where the detected objects are identical in kind (category) but requires programs that meet the materials of the detected objects. For example, in a case where the kind of the detected object is the pressure, whereas the materials are different such as argon, nitrogen, and carbon dioxide, processing programs that meet the materials are required.

The display device 37 can also make display that meets the kind of the language of each country in accordance with the processing program stored in the storage device 35. For example, when a processing program on Japanese signage is stored, display is made in Japanese language when words are displayed in the display device 37 and, when a processing program on English signage is stored, display is made in English language when words are displayed in the display device 37.

Note that the kind of language includes not only the kind of the language itself such as Japanese language or English language as explained above; it also includes the kind of systems of unit. Suppose, for example, a case where there is a country such as Japan where "kPa (kilopascal)" is adopted as the kind of language of pressure unit and a country such as United States of America where "bar" is adopted. In such a case, when a processing program for display in Japanese unit is stored in the storage device 35, display in the unit adopted in Japan is displayed in the display device 37, and when a processing program for display in U. S. unit is stored in the storage device 35, display in the unit adopted in the United States of America is displayed in the display device 37.

Note here that, in this embodiment, these processing programs are not stored in the storage device 35. In this embodiment, in accordance with a purpose intended by the user, only a required processing program is read out by the user's operation from the program storage unit 50, which is a separated device from the sensor 10 and will be explained below, and is stored in the storage device 35 of the sensor 10.

### 3. Configurations of Program Storage Unit

The program storage unit 50 is provided with a readout device 51, a program storage device 52, a display panel 54, an operating portion 55, and a network I/F 53. The readout device 51 has a CPU and the like. The program storage device 52 has a HDD (hard disk drive) and the like wherein a plurality of processing programs are stored. The display panel 54 displays properties such as file names of the processing programs stored in the program storage device 52. The operating portion 55 can select a processing program out of the processing programs displayed in the display panel 54. The selected processing program is then sent out to the control unit 30. The network I/F 53 sends out the processing program to the external.

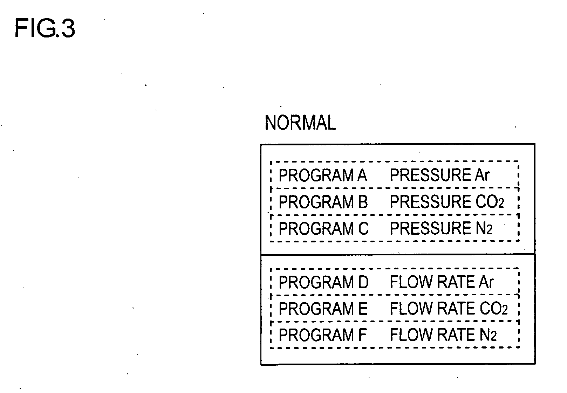

The programs stored in the program storage device 52 includes a plurality of processing programs, as shown in Fig. 3, that are required for the processing in the sensor 10 as explained above.

The processing programs whereby the physical quantities are recognized as numeric values in accordance with the kinds (categories) of the detected objects includes, for example, a processing program whereby the CPU 33 of the operation device 31 recognizes the physical quantity from the pressure sensor as the numeric value of the pressure, and a processing program whereby the CPU 33 recognizes the physical quantity from the flow rate sensor as the numeric value of the flow rate.

Furthermore, in the case where the detected objects are identical in kind (category) thereof, whereas the materials are different such as argon, nitrogen, carbon dioxide, processing programs that meet the materials are required. Therefore, such processing programs are also stored in the program storage device 52.

Furthermore, processing programs to perform display in accordance with the kind of the language of each country are stored in the program storage device 52. For example, the processing program on Japanese signage and the processing program on English signage are stored. Furthermore, as such kinds of language, processing programs in accordance with the kinds of the systems of unit are stored. For example, a processing program for display in Japanese systems of unit and a processing program for display in U.S. systems of unit are stored.

Then, when operation by the operating portion 55 of the program storage unit is made and information on the required processing program is supplied from the control unit 30 to the readout device 51, the readout device 51 read outs a corresponding processing program out of the plurality of processing programs stored in the program storage device 52, and transmits the processing program to the control unit 30.

### 4. Processing by Operation Device

In the teaching mode, the operation device 31 executes processing as follows:

### <Teaching Mode>

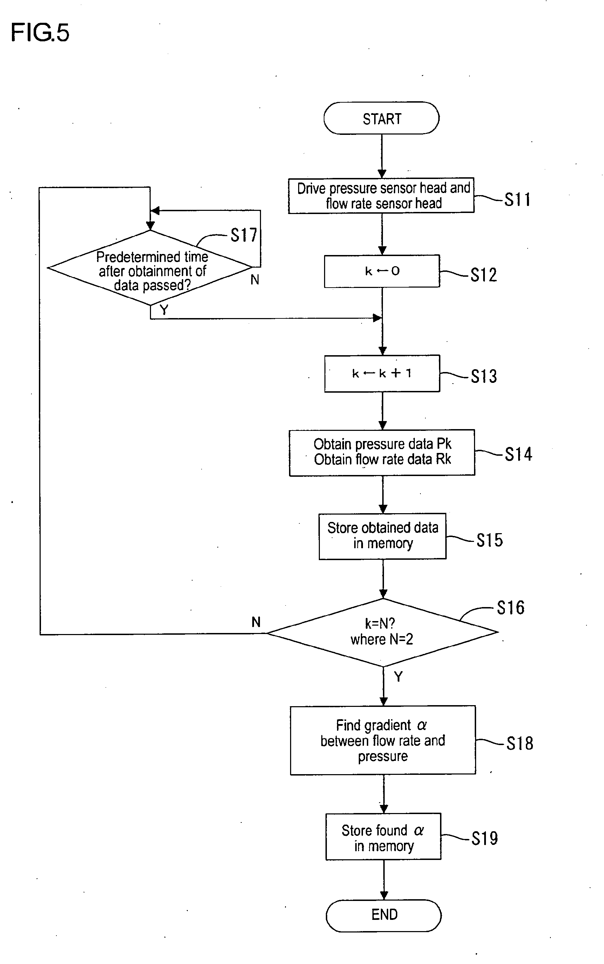

As shown in Fig. 5, when the CPU 33 of the operation device 31 receives a signal of teaching start, the CPU 33 drives the pressure sensor head 21 and the flow rate sensor head 22 (S11), resets a counter value k (S12), and adds 1 to k (S13).

Then, the CPU 33, based on the detection signals that are outputted from the pressure sensor head 21 and the flow rate sensor head 22 depending on the pressure and flow rate, obtains sampling data including pressure data P1 in the flow path and flow rate data R1 in the flow path (S14), and stores the obtained data in the memory (S15).

Next, the CPU 33 determines whether the counter value k is 2 (S16), and since k is 1 ("N" in S16), waits for a predetermined time (a time when the flow rate in the pipe 40 is varied) from obtainment of the pressure data P1 and the flow rate data R1 in the flow path to pass ("N" in S17). At this time, the user operates a work to vary the flow rate and the like in the pipe 40. Then, when the CPU 33 determines that the predetermined time has passed ("Y" in S17), the CPU 33 adds 1 to k (S13) and, based on the detection signals, obtains sampling data including pressure data P2 in the flow path and flow rate data R2 in the flow path (S14), and stores the obtained data in the memory (S15).

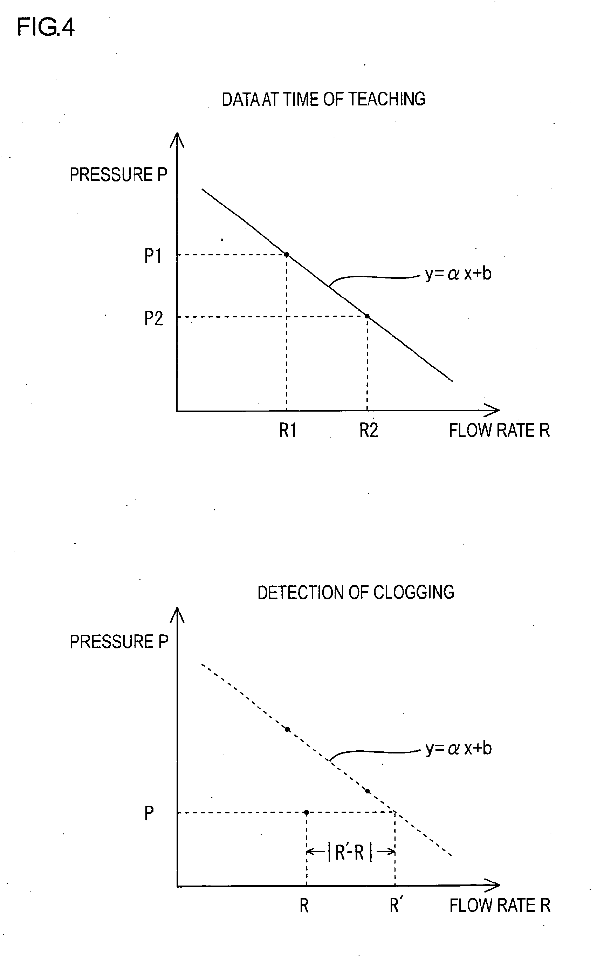

Next, it is determined whether k is 2 (S16), and since k is 2 ("Y" in S16), a linear function based on the data at two points obtained on flow rate and pressure (S18 see Fig. 4) is found. Note that the function may be found based on data at three or more than three points (N≥3). In this case, for example, a linear function passing proximity of the data at three or more than three points or a curvilinear function (a quadric or more higher order function) should be found.

Then, the information on the found linear function (y=αx+b) is stored in the memory (S19), and the teaching mode is terminated.

Next, in the detection mode, processing is executed as follows:

### <Detecting Mode>

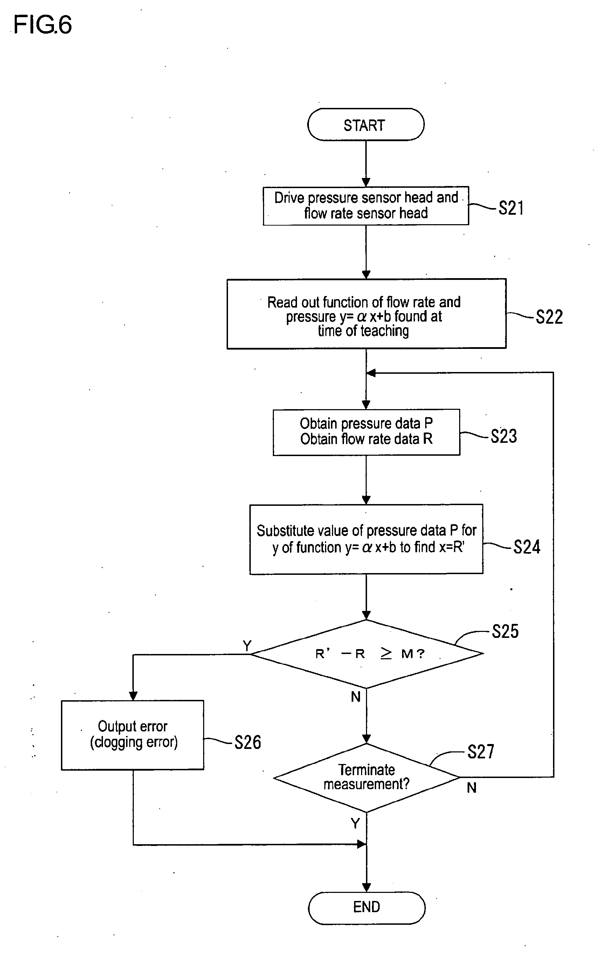

As shown in Fig. 6, when the CPU 33 receives a detection start signal, the CPU 33 drives the pressure sensor head 21 and the flow rate sensor head 22 (S21), and reads out the information on the linear function (y=αx+b) of the flow rate and pressure that has been stored in the memory at a time of the teaching mode (S22).

Then, the CPU 33, based on the detection signals that are outputted from the pressure sensor head 21 and the flow rate sensor head 22 depending on the pressure and the flow rate, obtains detected data including pressure data P in the flow path and flow rate data R in the flow path (S23).

Next, a value of the pressure data P is substituted for y of the function (y=αx+b), and thereby flow rate x=R' is found (S24). Then, it is determined whether a difference between the instantaneous flow rate R and the flow rate R' in the teaching is equal to or larger than M, which is set in advance (S25. See Fig. 4).

M is a reference quantity for determining whether the variation in flow rate derives from clogging in the pipe 40. M is set in accordance with a dimension of the pipe 40, a degree of clogging to be detected, and the like (can be set to an arbitrary numeric value).

In a case where the difference between the flow rate R and the flow rate R' (R'-R) is equal to or larger than M ("Y" in S25), in a case where such a great variation is caused in flow rate, likelihood of clogging or beginning of clogging in the pipe 40 is greater. Accordingly, an error signal is outputted to announce to the user.

The user that has become aware of the error display (annunciation) can take an action such as to stop delivery of the fluid in the pipe 40. Note that, in this embodiment, substituted in the function is the value of the pressure data P. However, it may be other than this. The value of the flow rate data R may be substituted for y of the function (y=αx+b) so that the pressure relative to the same flow rate in teaching is found, a difference in pressure is compared with a reference value, and thereby clogging is detected.

On the other hand, in a case where the difference between the flow rate R and the flow rate R' (R'-R) is neither equal to nor larger than M ("N" in S25), it is determined whether it is directed to terminate the measurement (S27), and when it is not directed to terminate the measurement ("N" in S27), the processing is returned to S23, and the pressure data P in the flow path and the flow rate data R in the flow path are obtained.

On the other hand, when it is directed to terminate the measurement in S27 ("Y" in S27), the detection of clogging is terminated.

### Effects of This Embodiment

(1) In accordance with this embodiment, the processing program is wrote in the storage device 35 via the network I/F 38 (the external program input device), and thereby the operation device 31 is allowed to execute the processing of detected signals that are outputted from the detection device in accordance with the processing program. Therefore, though a required processing program is not provided in advance, the required processing program can be written when the requirement arises, and thereby the processing that meets the detected object can be performed. Furthermore, since it is unnecessary for the sensor 10 to be provided in advance with all processing programs that have potential to be required, storage capacity that is necessary to store the processing programs in the storage device 35 can be reduced.
(2) In accordance with this embodiment, the processing program is wrote in the storage device 35 via the network I/F 38 (the external program input device), and thereby the operation device 31 is allowed to execute the display processing for the display device 37 in accordance with the kind of the language. Therefore, though the required processing program on the kind of the language is not provided in advance, the proper processing program on the kind of the language is written, and thereby the display in the display device 37 can be performed with a perceptible kind of the language.
(3) In accordance with this embodiment, the conditions of the flow path are detected based on the comparison of the sampling data that shows the relation between the pressure and the flow rate that is obtained by sampling the pressure and the flow rate before the conditions are detected with the detected data that shows the relation between the pressure and the flow rate of the fluid that is obtained when conditions are detected. Therefore, the conditions of the flow path can be detected with the simple configurations.

### <Second Embodiment>

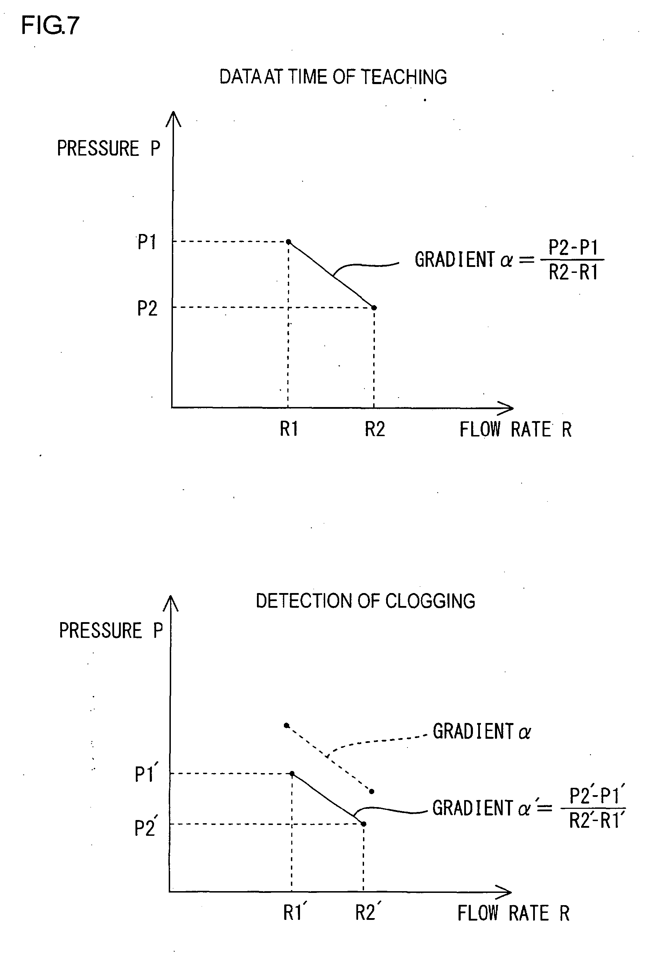

Next, a second embodiment in accordance with the present invention will be explained with reference to Figs. 7 through 9.

The above embodiment is configured to find the relational expression of the flow rate and the pressure in the teaching mode, and, based on the relational expression, detect clogging in the detection mode. The second embodiment is configured to find a gradient between the flow rate and the pressure in the teaching mode, and detect clogging based on the gradient in the detection mode. Note that similar configurations with the above embodiment are designated with the same numerals, while the explanations are omitted.

### <Teaching Mode>

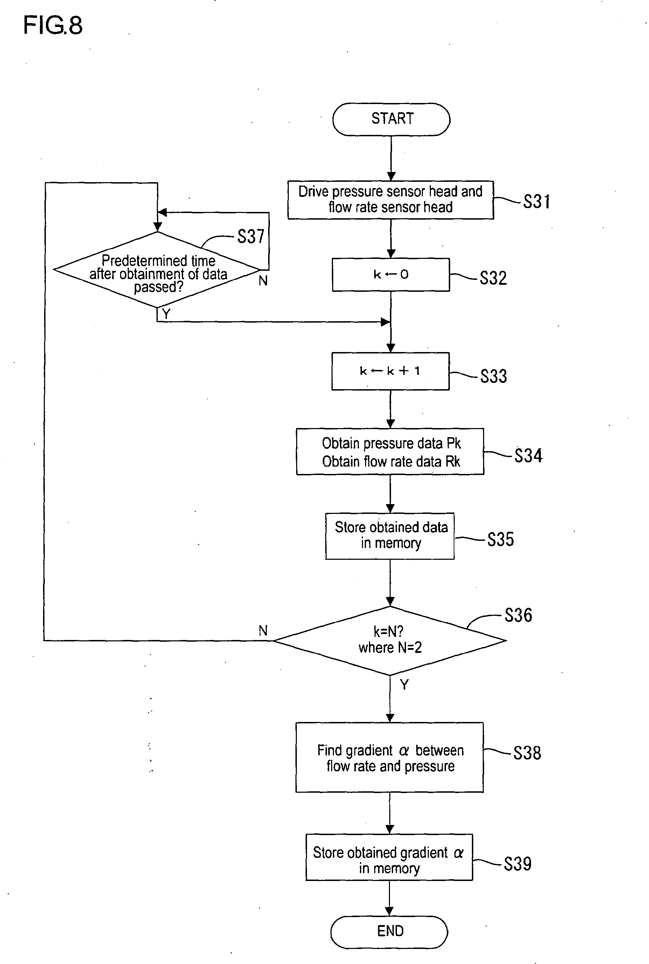

As shown in Fig. 8, when the CPU33 receives the teaching start signal, the CPU 33 drives the pressure sensor head 21 and the flow rate sensor head 22 (S31), resets the counter value k (S32), and adds 1 to k (S33).

Then, the CPU 33, based on the detection signals that are outputted from the pressure sensor head 21 and the flow rate sensor head 22 depending on the pressure and the flow rate, obtains sampling data including the pressure data P1 in the flow path and the flow rate data R1 in the flow path (S34), and stores the obtained data in the memory (S35).

Next, the CPU 33 determines whether k is 2 (S36), and since k is 1 ("N" in S36), waits for the predetermined time (the time when the flow rate in the pipe 40 is varied) from the obtainment of the pressure data P1 and the flow rate data R1 in the flow path to pass ("N" in S37). Then, when the CPU 33 determines that the predetermined time has passed ("Y" in S37), the CPU 33 adds 1 to k (S33) and, based on the detection signals, obtains the sampling data including the pressure data P1 in the flow path and the flow rate data R1 in the flow path (S34), and stores the obtained data in the memory (S35).

Next, it is determined whether k is 2 (S36), and since k is 2 ("Y" in S36), based on the data at the two points obtained on flow rate and pressure, a gradient α between the flow rate and the pressure is found (S38. see Fig. 7).

Then, information on the found gradient α (S39) is stored in the memory (S39), and the teaching mode is terminated.

Next, in the detection mode, processing as follows is executed.

### <Detection Mode>

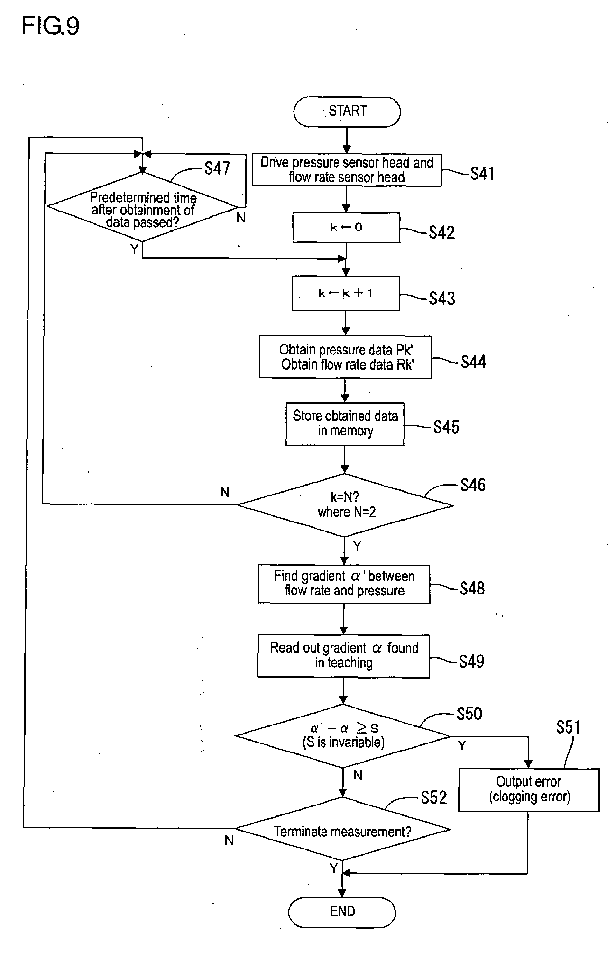

As shown in Fig. 9, when the CPU 33 receives the detection start signal, the CPU 33 drives the pressure sensor head 21 and the flow rate sensor head 22 (S41), resets the counter value k (S42), and adds 1 to k (S43).

Then, the CPU 33, based on the detection signals outputted from the pressure sensor head 21 and the flow rate sensor head 22 depending on the pressure and the flow rate, obtains the detected data including the pressure data P1 in the flow path and the flow rate data R1 in the flow path (S44), and stores the obtained data in the memory (S45).

Next, the CPU 33 determines whether k is 2 (S46), and since k is 1 ("N" in S46), waits for the predetermined time (the time when the flow rate in the pipe 40 is varied) from the obtainment of the pressure data P1 and the flow data R1 in the flow path to pass ("N" in S47). Then, when the CPU 33 determines that the predetermined time has passed ("Y" in S47), the CPU 33 adds 1 to k (S43), and, based on the detection signals, obtains the detected data including the pressure data P2 in the flow path and the flow rate data R2 in the flow path (S44), and stores the obtained data in the memory (S45).

Next, it is determined whether k is 2 (S46), and since k is 2 ("Y" in S46), based on the data obtained at two points on the flow rate and the pressure, a gradient α' between the flow rate and the pressure is found (S48. See Fig. 7).

Next, the gradient α that has been found at the time of the teaching mode is read out from the memory (S49), and it is determined whether a difference between the gradient α' and the gradient α (α'-α) is equal to or larger than S (S is invariable) (S50). S is a reference quantity for determining whether the variation in flow rate derives from clogging in the pipe 40. S is set in accordance with a dimension of the pipe 40, a degree of clogging to be detected, and the like (can be set to an arbitrary numeric value).

When the difference between the gradient α' and the gradient α (α'-α) is equal to or larger than S ("Y" in S50), in the case where such a great variation is caused in flow rate, likelihood of clogging or beginning of clogging in the pipe 40 is greater. Accordingly, the error signal is outputted to announce to the user. The user that has become aware of the error display (annunciation) can take the action such as to stop delivery of the fluid in the pipe 40 and the like.

On the other hand, in a case where the difference between the gradient α' and the gradient α (α'-α) is neither equal to nor larger than the S ("N" in S50) it is determined whether it is directed to terminate the measurement (S52), and when it is not directed to terminate the measurement ("N" in S52), it is returned to S47, and it is waited that the predetermined time (the time when the flow rate in the pipe 40 is varied) from the obtainment of the pressure data P1 and the flow rate data R1 in the flow path passes ("N" in S47). Then, when the CPU 33 determines that the predetermined time has passed ("Y" in S47), the CPU 33 repeats the above processing.

On the other hand, when it is directed to terminate the measurement in S52 ("Y" in S52), the detection of clogging is terminated.

Thus, in accordance with this embodiment, the conditions in the flow path can be detected with such a simple configurations wherein the CPU 33 (the operation device) compares the gradients between the pressures and the flow rates.

### <Third Embodiment>

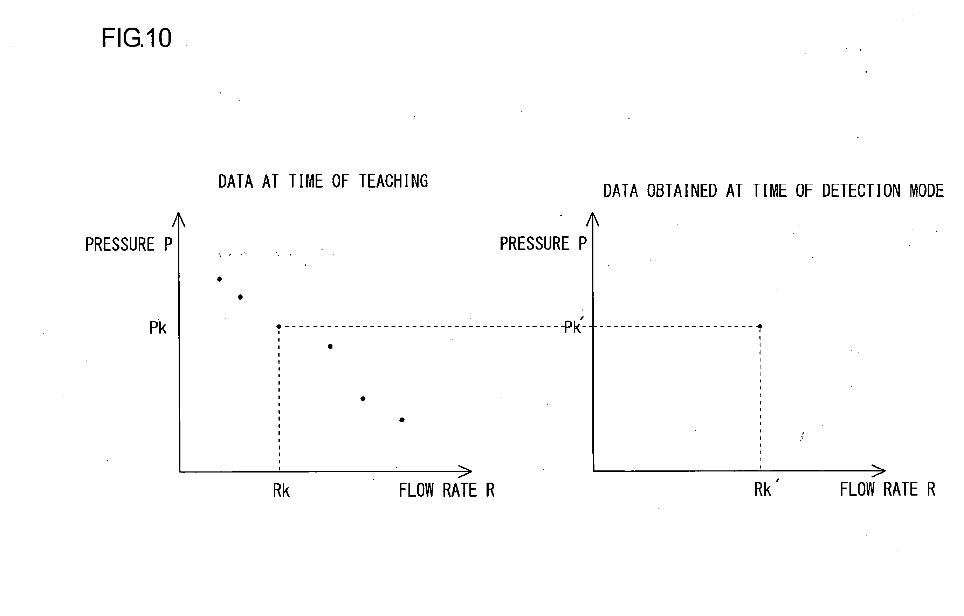

Next, a third embodiment will be explained with reference to Figs. 10 through 12.

The above embodiment is configured to obtain the pressure and the flow rate data in every predetermined time in the teaching mode. The third embodiment is configured to obtain the pressure and the flow rate data when the user performs an operation to obtain the data.

### <Teaching Mode>

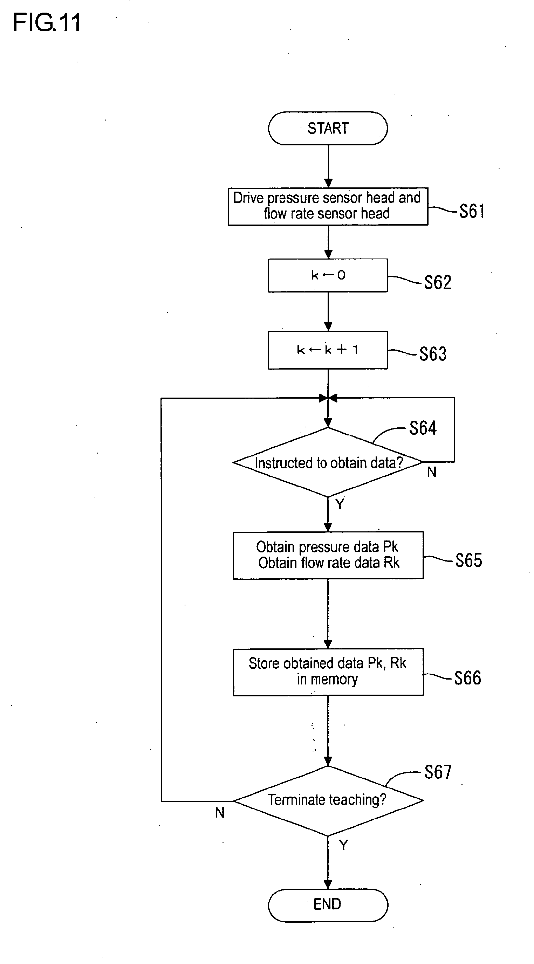

As shown in Fig. 11, when the CPU 33 receives the teaching start signal, the CPU 33 drives the pressure sensor head 21 and the flow rate sensor head 22 (S61), resets the counter value k (S62), and adds 1 to k (S63).

Next, the CPU 33 waits for an instruction to obtain the pressure and the flow rate data ("N" in S64) to be made by a signal from the operating portion 39. In a case where the instruction to obtain the pressure and the flow rate data is made ("Y" in S64), the CPU 33 obtains pressure data Pk in the flow path and flow rate data Rk in the flow path based on the detection signals outputted from the pressure sensor head 21 and the flow rate sensor head 22 depending on the pressure and the flow rate (S65. See Fig. 10), and stores the obtained data in the memory (S66).

Next, when it is not directed to terminate the measurement ("N" in S67), the CPU 33 adds 1 to the counter value k in S63, and executes the similar processing.

On the other hand, when it is directed to terminate the measurement ("Y" in S67), the teaching mode is terminated.

Next, in the detection mode, the following processing is executed.

### <Detection Mode>

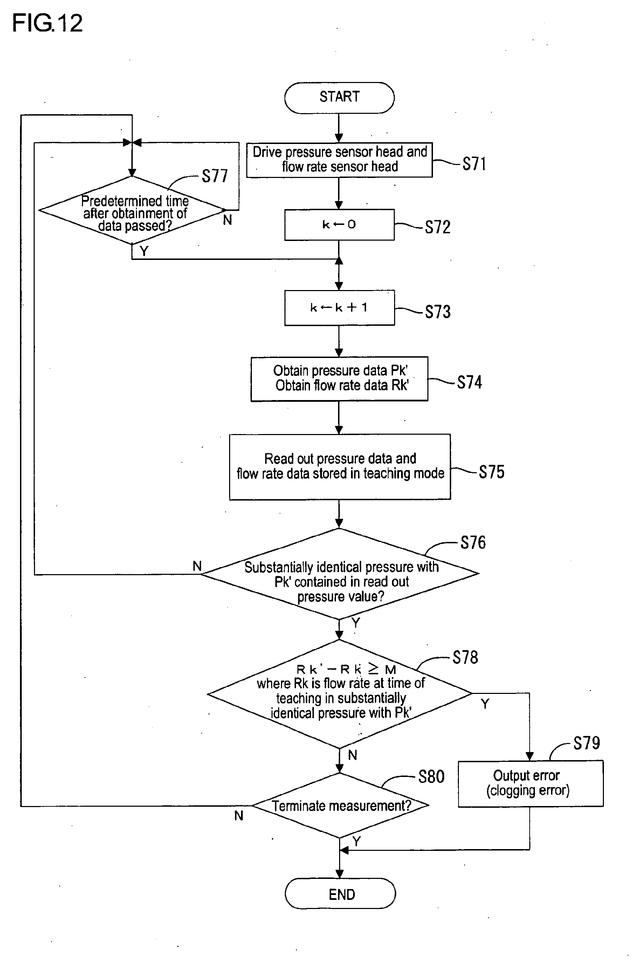

As shown in Fig. 12, when the CPU 33 receives the detection start signal, the CPU 33 drives the pressure sensor head 21 and the flow rate sensor head 22 (S71), resets the counter value k (S72), and adds 1 to k (S73).

Then, based on the detection signals outputted from the pressure sensor head 21 and the flow rate sensor head 22 depending on the pressure and the flow rate, the CPU 33 obtains pressure data Pk' in the flow path and flow rate data Rk' in the flow path.

Next, the pressure data and the flow rate data that have been stored in the teaching mode is read out (S75). Then, it is determined whether the pressure data stored in the teaching mode contains substantially identical (proximate) pressure data with the pressure data Pk' (S76).

When the substantially identical (proximate) pressure data with the pressure data Pk' is not contained ("N" in S76), it is waited that the predetermined time (the time when the flow rate in the pipe 40 is varied) from the obtainment of the pressure data P1 and the flow rate data R1 in the flow path ("N" in S77) passes. Then, when the CPU 33 determines that the predetermined time has passed ("Y" in S77), the CPU 33 adds 1 to the counter value k, and repeats the above processing (S73 to S77).

In a case where the substantially identical pressure data (proximity) with the pressure data Pk' is contained ("Y" in S76. See Fig. 10), it is determined whether a difference between the flow rate data Rk' and the flow rate data Rk (Rk'-Rk) is equal to or larger than M (M is invariable that can be arbitrarily set) (S78).

In a case where the difference between the flow rate data Rk' and the flow rate data Rk is equal to or larger than M ("Y" in S78), it is found that the great variation in flow rate is caused, which means that clogging is caused in the pipe 40, or clogging or the like is being caused. Accordingly, the error signal is outputted to announce this to the user. The user that has become aware of the error display (annunciation) can take the action such as to stop the delivery of the fluid in the pipe 40.

On the other hand, in a case where the difference between the flow rate data Rk' and the flow rate data Rk is neither equal to nor larger than M ("N" in S78), it is determined whether it is directed to terminate the measurement (S80), and when it is not directed to terminate the measurement ("N" in S80), it is returned to S77, and it is waited that the predetermined time (the time when the flow rate in the pipe 40 is varied) from the obtainment of the pressure data P1 and the flow rate data R1 in the flow path ("N" in S77) passes. Then, when the CPU 33 determines that the predetermined time has passed ("Y" in S77), the CPU 33 repeats the above processing (S73 to S80).

On the other hand, when it is directed in S80 to terminate the measurement ("Y" in S80), the detection of clogging is terminated.

Note that while this embodiment is configured such that clogging is detected based on the difference in flow rate in the substantially identical (proximate) pressure data with the data stored in the teaching mode, it may be configured such that clogging is detected based on the difference in pressure in the substantially identical (proximate) flow rate data with the data stored in the teaching mode.

### <Fourth Embodiment>

The above embodiments are configured to detect the conditions of the flow path based on the pressure and the flow rate. In a fourth embodiment, the detection signal outputted from the temperature-detecting portion 24 (a temperature detection device), the detection signal depending the pressure outputted from the pressure sensor, and the detection signal depending on the flow rate outputted from the flow rate sensor are inputted to relations between the pressure and the temperature, and the conditions of the flow path is detected from the relations.

### <Teaching Mode>

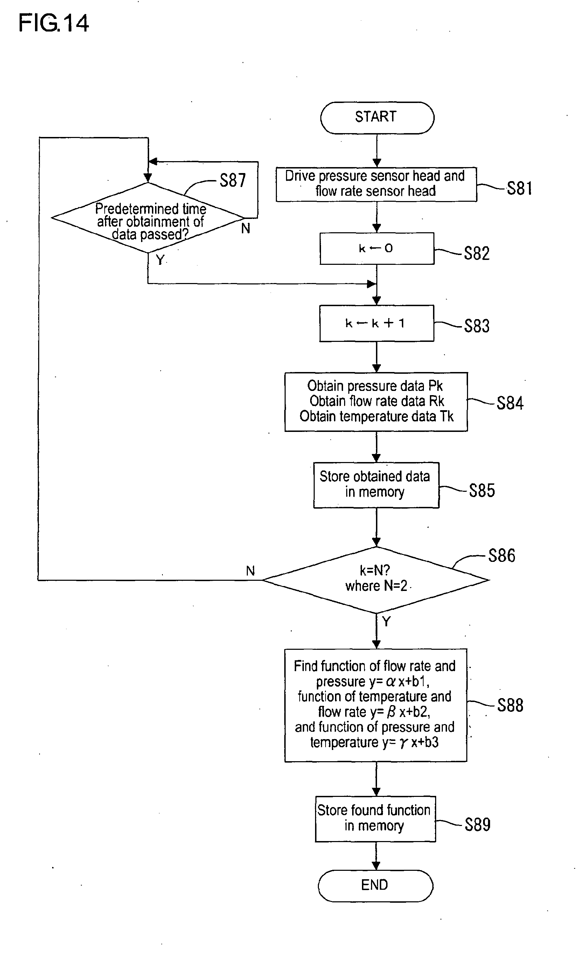

As shown in Fig. 14, when the CPU 33 of the operation device 31 receives the teaching start signal, the CPU 33 drives the pressure sensor head 21 and the flow rate sensor head 22 (S81), resets the counter value k (S82), and adds 1 to k (S83).

Then, the CPU 33 obtains the pressure data P1 in the flow path, the flow rate data R1 in the flow path, and temperature data T1 in the flow path based on the detection signals that are outputted from the pressure sensor head 21 and the flow rate sensor head 22 depending on the pressure and the flow rate (S84), and stores the obtained data in the memory (S85).

Next, the CPU 33 determines whether k is 2 (S86), and since k is 1 ("N" in S86), the CPU 33 waits for the predetermined time (the time when the flow rate in the pipe 40 is varied) from the obtainment of the pressure data P1 and the flow rate data R1 in the flow path to pass ("N" in S87). At this time, the user operates the work such as to vary the flow rate and the like in the pipe 40. Then, when the CPU 33 determines that the predetermined time has passed ("Y" in S87), the CPU 33 adds 1 to k (S83), obtains the pressure data P2 in the flow path, the flow rate data R2 in the flow path, and temperature data T2 in the flow path based on the detection signals (S84), and stores the obtained data in the memory (S85).

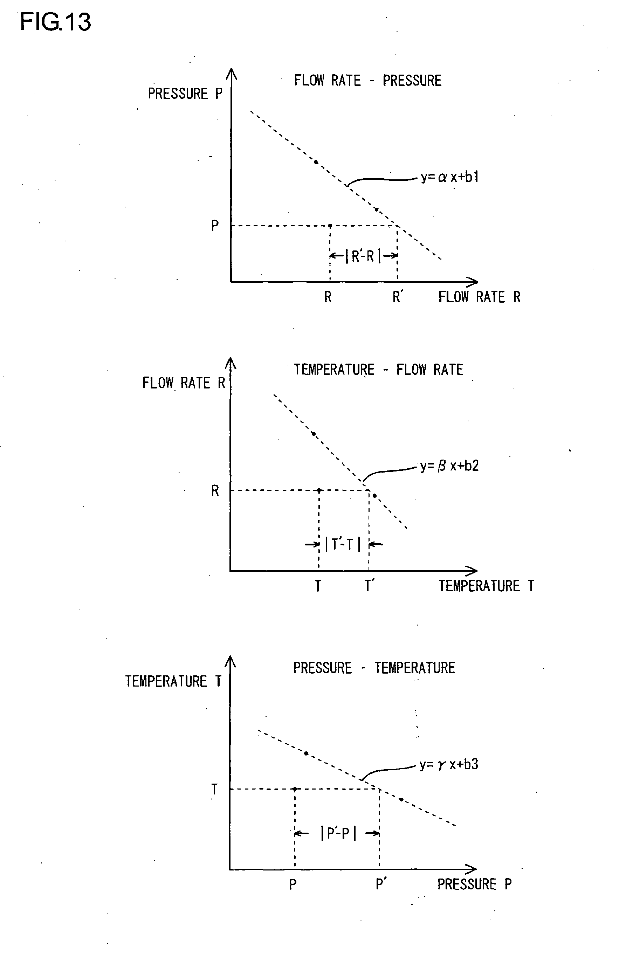

Next, it is determined whether the counter value k is 2 (S86), and since k is 2 ("Y" in S86), each of linear functions (y=αx+b1, y=βx+b2, and y=γx+b3) is found based on the data at two points obtained on flow rate and pressure, the data at two points obtained on temperature and flow rate, and the data at two points obtained on pressure and temperature, respectively (S88. See Fig. 13). Note that the functions may be found based on data at three or more than three points (N≥3 in S86). In this case, for example, linear functions passing proximity of the data at three or more than three points or curvilinear functions (a quadric or more higher order function) should be found.

Then, information on the found linear functions (y=αx+b1, y=βx+b2, and y=γx+b3) are stored in the memory (S89), and the teaching mode is terminated.

Next, in the detection mode, the following processing is executed.

### <Detection Mode>

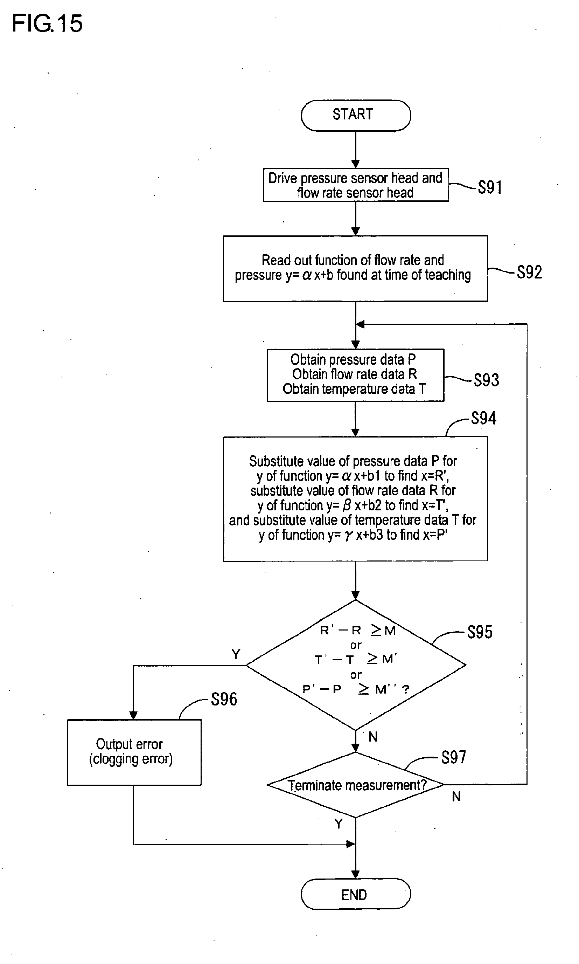

As shown in Fig. 15, when the CPU 33 receives the detection start signal, the CPU 33 drives the pressure sensor head 21 and the flow rate sensor head 22 (S91), and reads out the information on the linear function (y=αx+b) of the flow rate and the pressure that has been stored in the memory in the teaching mode (S92).

Then, the CPU 33 obtains the pressure data P in the flow path, the flow rate data R in the flow path, and temperature data T in the flow path based on the detection signals outputted from the pressure sensor head 21 and the flow rate sensor head 22 depending on the pressure and the flow rate (S93).

Next, the value of the pressure data P is substituted for y of the function (y=αx+b1), and thereby the flow rate x=R' relative to the same pressure in the teaching is found. The value of the flow rate data R is substituted for y of the function (y=βx+b2), and thereby the temperature x=T' relative to the same flow rate in the teaching is found. The value of the temperature data T is substituted for y of the function (y=γx+b3), and thereby the pressure x=P' relative to the same temperature in the teaching (S94) is found.

Then, it is determined whether the difference between the instantaneous flow rate R and the flow rate R' in the teaching (R'-R) is equal to or larger than the predetermined M, or a difference between the instantaneous temperature T and a temperature T' in the teaching (T'-T) is equal to or larger than a predetermined M', or, a difference between the instantaneous pressure P and a pressure P' in the teaching (P'-P) is equal to or larger than a predetermined M" (S95. See Fig. 13).

M, M', M" are reference quantities to determine whether the variation in flow rate or the like derives from clogging in the pipe 40. M, M', M" can be set in accordance with the dimension of the pipe 40, the degree of clogging to be detected, and the like (each of M, M', M" may be set to an arbitrary numeric value).

In a case where a variation greater than either of M, M', M" is caused ("Y" in S95), in the case where such a great variation is caused, likelihood of clogging or beginning of clogging in the pipe 40 is greater. Accordingly, an error signal is outputted to announce to the user. The user that has become aware of the error display (annunciation) can take the action such as to stop the delivery of the fluid in the pipe 40 and the like.

On the other hand, in a case where the variations are equal to or smaller than all of M, M', M" ("N" in S95), it is determined whether it is directed to terminate the measurement (S97), and when it is not directed to terminate the measurement ("N" in S97), it is returned to S93, and the pressure data P in the flow path and the flow rate data R in the flow path are obtained.

On the other hand, when it is directed in S97 to terminate the measurement ("Y" in S97), the detection of clogging is terminated.

### <Fifth Embodiment>

The second embodiment is configured to detect the conditions of the flow path based on the comparison of the gradient between the pressure and the flow rate of the fluid in the teaching mode with the gradient between the pressure and the flow rate of the fluid in the detection mode. A fifth embodiment is configured to detect the conditions of the flow path based on comparisons of gradients of the pressure, the flow rate, and the temperature of the fluid in the teaching mode with gradients of the pressure, the flow rate, and the temperature of the fluid in the detection mode.

### <Teaching Mode>

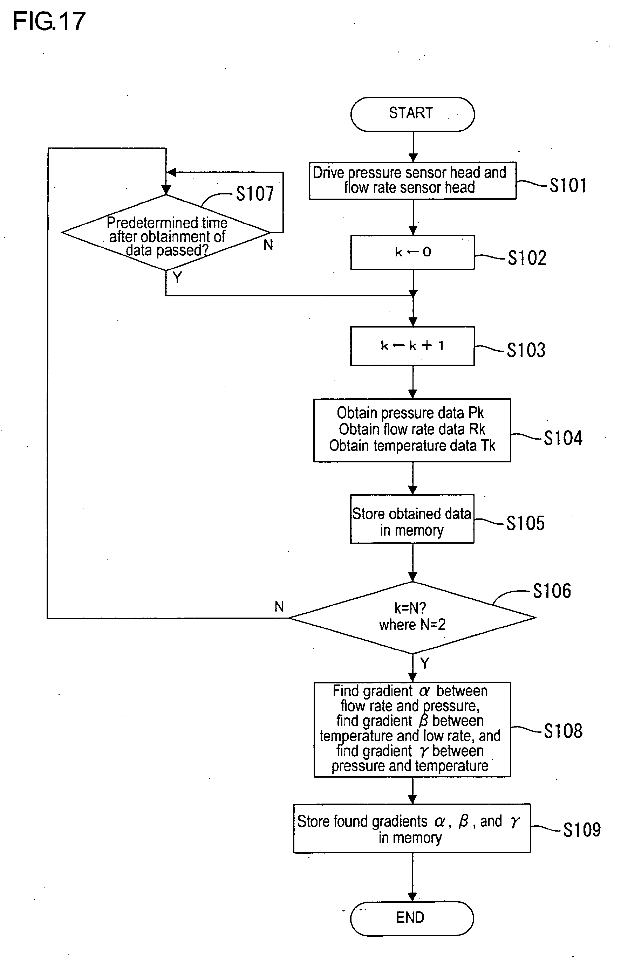

As shown in Fig. 17, when the CPU 33 receives the teaching start signal, the CPU 33 drives the pressure sensor head 21 and the flow rate sensor head 22 (S101), resets the counter value k (S102), and adds 1 to k (S103).

Then, the CPU 33 obtains the pressure data P1 in the flow path, the flow rate data R1 in the flow path, and the temperature data T1 in the flow path based on the detection signals outputted from the pressure sensor head 21 and the flow rate sensor head 22 depending on the pressure and the flow rate (S104), and stores the obtained data in the memory (S105).

Next, the CPU 33 determines whether the counter value k is 2 (S106), and since the counter value k is 1 ("N" in S106), the CPU 33 waits for the predetermined time (the time when the flow rate in the pipe 40 is varied) from the obtainment of the pressure data P1 and the flow rate data R1 in the flow path to pass ("N" in S107). Then, when the CPU 33 determines that the predetermined time has passed ("Y" in S107), the CPU 33 adds 1 to k (S103), obtains the pressure data P2 in the flow path, the flow rate data R2 in the flow path, and the temperature data T2 in the flow path (S104) based on the detection signals, and stores the obtained data in the memory (S105).

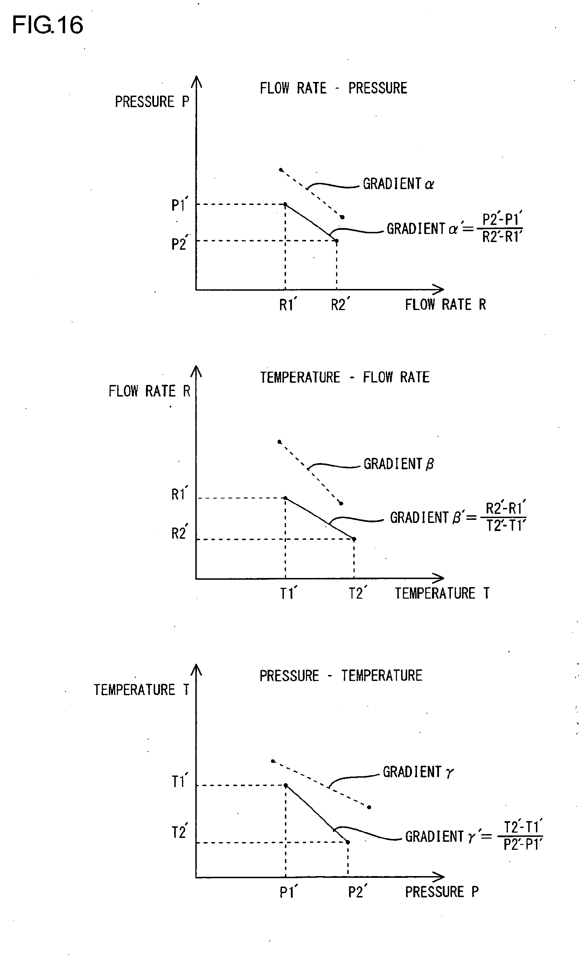

Next, it is determined whether the counter value k is 2 (S106), and since k is 2 ("Y" in S106), the gradient α between the flow rate and the pressure is found based on the data at two points obtained on flow rate and pressure, the gradient β between the temperature and the flow rate is found based on the data at two points obtained on temperature and flow rate, and the gradient γ between the pressure and the temperature is found based on the data at two points obtained on pressure and temperature (S108. See Fig. 16).

Then, the information on the found gradients α, β, and γ is stored in the memory (S109), and the teaching mode is terminated.

Next, in the detection mode, the following processing is executed.

### <Detection Mode>

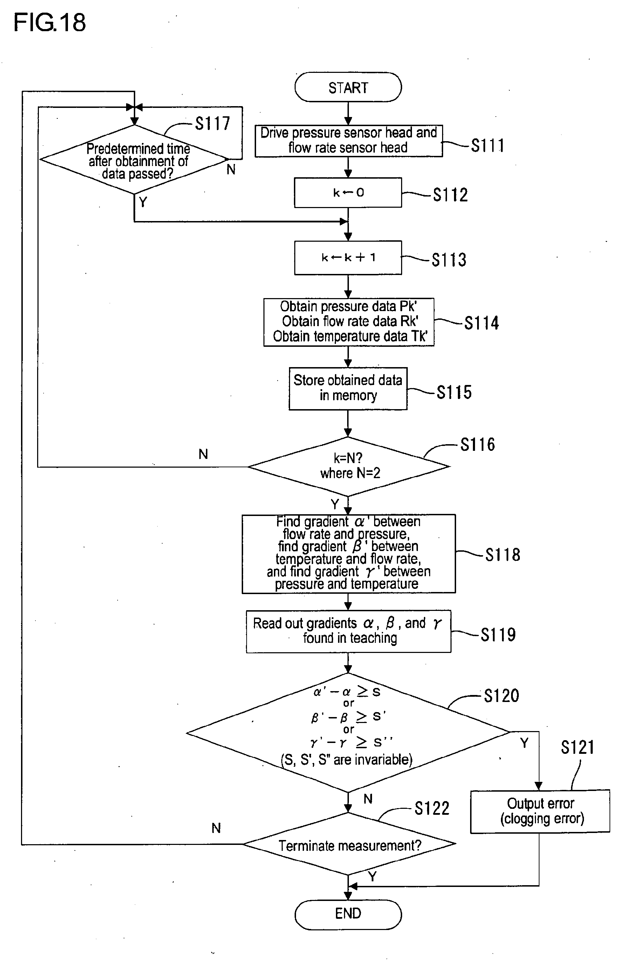

As shown in Fig. 18, when the CPU 33 receives the detection start signal, the CPU 33 drives the pressure sensor head 21 and the flow rate sensor head 22 (S111), resets the counter value k (S112), and adds 1 to k (S113).

Then, the CPU 33 obtains the pressure data P1' in the flow path, the flow rate data R1' in the flow path, and the temperature data T1' in the flow path based on the detection signals outputted from the pressure sensor head 21 and the flow rate sensor head 22 depending on the pressure and the flow rate (S114), and stores the obtained data in the memory (S115).

Next, the CPU 33 determines whether k is 2 (S116), and since k is 1 ("N" in S116), the CPU 33 waits for the predetermined time (the time when the flow rate in the pipe 40 is varied) from the obtainment of the pressure data P1 and the flow rate data R1 in the flow path to pass ("N" in S117). Then, when the CPU 33 determines that the predetermined time has passed ("Y" in S117), the CPU 33 adds 1 to k (S113), obtains the pressure data P2' in the flow path, the flow rate data R2' in the flow path, and the temperature data T2' in the flow path based on the detected signals (S114), and stores the obtained data in the memory (S115).

Next, it is determined whether the counter value k is 2 (S116), and since k is 2 ("Y" in S116), the gradient α' between the flow rate and the pressure is found based on the data at two points obtained on flow rate and pressure, the gradient β' between the temperature and the flow rate is found based on the data at two points obtained on temperature and flow rate, and the gradient γ' between the pressure and the temperature is found based on the data at two points obtained on pressure and temperature (S118. See Fig. 16).

Next, the gradient α obtained in the teaching mode is read out from the memory (S119), and it is determined whether the difference between the gradient α' and the gradient α (α'-α) is equal to or larger than S, the difference between the gradient β' and the gradient β (β'-β) is equal to or larger than S', the difference between the gradient γ' and the gradient γ (γ'-γ) is equal to or larger than S" (S, S', S" are invariable) (S120). S, S', and S" are reference quantities to determine whether the variation in flow rate derives from clogging in the pipe 40. S, S', S" are set in accordance with the dimension of the pipe 40, the degree of clogging to be detected, and the like (S, S' , and S" can be set to arbitrary numeric values).

When the difference (α'-α) is equal to or larger than S, or the difference (β'-β) is equal to or larger than S', or the difference (γ'-γ) is equal to or larger than S" ("Y" in S120), in a case where such a great variation in flow rate is caused, likelihood of clogging or beginning of clogging in the pipe 40 is greater. Accordingly, an error signal is outputted to announce to the user. The user that has become aware of the error display. (annunciation) can take the action such as to stop the delivery of the fluid in the pipe 40 and the like.

On the other hand, when any one of differences of the gradients is equal to or smaller than the respective one of S, S', S" ("N" in S120), it is determined whether it is directed to terminate the measurement (S122). When it is not directed to terminate the measurement ("N" in S122), it is returned to S117, and it is waited that the predetermined time (the time when the flow rate in the pipe 40 is varied) from the obtainment of the pressure data P1 and the flow rate data R1 in the flow path passes ("N" in S117). Then, when the CPU 33 determines that the predetermined time has passed ("Y" in S117), the above processing is repeated.

On the other hand, when it is directed in S122 to terminate the measurement ("Y" in S122), the detection of clogging is terminated.

Thus, according to this embodiment, with the simple configurations that the CPU 33 (the operation device) compares the gradients, the conditions in the flow path can be detected.

### <Sixth Embodiment>

A sixth embodiment is an illustration where the plurality of processing programs are written not in the program storage unit 50 but in a storage medium such as a hard disk or a CD-R in a personal computer. When the user connects the personal computer with the sensor 10 via a communication cable and gives an instruction to transmit the processing program that the personal computer requires, only the required processing program is selected and read out from the storage medium such as the hard disk or the CD-R set in a CD drive in the personal computer, and is transmitted to the storage device 35 of the sensor 10.

Thus, though the required processing program is not provided in advance in the sensor 10, the required processing program can be read out and transmitted to the sensor 10 according to the read instruction. Therefore, the processing that meets the detected object can be executed. Furthermore, since it is unnecessary for the sensor 10 to be provided in advance with all processing programs that have potential to be required, storage capacity that is necessary to store the processing program in the storage device 35 can be reduced.

Furthermore, the processing programs stored in the storage medium may be stored as programs that correspond to a single application selected from the plurality of the processing programs.

Thus, though the required processing program is not provided in advance in the sensor 10, the processing that meets the detected object can be executed using the required processing program. Furthermore, since the plurality of processing programs are stored as the programs that correspond to a single application, the processing program supplied to the sensor 10 can be easily used.

### <Other Embodiments>

The present invention is not limited to the above embodiments explained above with reference to the drawings, the following embodiments are also included within the scope of the present invention. Further various variations other than the following embodiments are also possible within the scope of the invention.

(1) While the above embodiments are configured to perform the measurement of temperature using the temperature sensor that the pressure sensor has, the measurement of temperature may be configured to be performed with a separately mounted temperature sensor.

(2) While the above embodiments are configured such that the functions found from the flow rate, the pressure, and the temperature are found from the two points on coordinate data of the flow and the pressure, it is not limited to this. The functions and gradients may be, for example, found from coordinate data at three or more than three points. Note that the functions in this case may connect the each of the points with a straight line, or may be a one that connects three or more than three points with a curved line. (3) While, in the above embodiments, the sensor 10 is the sensor 10 that is referred to as a remote head type one wherein the head units that meet the detected objects can be attached, the sensor 10 may be an all-in-one type one wherein a sensor (a flow rate sensor, a pressure sensor, or the like) that meets the detected object can be attached to the control unit 30.

## Claims

1. A sensor, comprising:
a detection device that outputs a detection signal that depends on a physical quantity of a detected object;
a storage device capable of storing a processing program; and
an operation device that executes processing in accordance with the processing program and based on the detection signal that is outputted from the detection device,
wherein the storage device includes the processing program wrote therein, the processing program being selected from a plurality of various processing programs.

2. A sensor, comprising:
a detection device that outputs a detection signal that depends on a physical quantity of a detected object;
a storage device capable of storing a processing program;
an operation device that executes processing in accordance with the processing program and based on the detection signal that is outputted from the detection device; and
an external program input device capable of writing the processing program in the storage device from external.

3. The sensor according to claim 1 or 2, comprising a display device, wherein the processing program is a program on a kind of a language, and
the operation device executes display processing for the display device, the execution of the display processing being in accordance with the kind of the language.

4. The sensor according to any one of claims 1 to 3, wherein the storage device is configured to be rewritable.

5. The sensor according to any one of claims 1 to 4, wherein the detected object is a fluid, the physical quantity is a pressure and a flow rate of the fluid, and the sensor detects a condition of a flow path the fluid passes therethrough,
wherein the processing program has the operation device execute processing to detect the condition of the flow path, the execution of the processing being based on a comparison of sampling data with detected data, the sampling data showing a relation between the pressure and the flow rate of the fluid, the sampling data being obtained by sampling of the pressure and the flow rate, the sampling being performed before the condition of the flow path is detected, the detected data showing a relation between the pressure and the flow rate of the fluid, the detected data being obtained when the condition is detected.

6. The sensor according to claim 5, wherein the processing program has the operation device execute processing to detect the condition of the flow path, the execution of the processing being based on an comparison of a gradient between the pressure and the flow rate of the fluid in the sampling data with a gradient between the pressure and the flow rate of the fluid in the detected data.

7. The sensor according to claim 5 or 6, comprising a head unit and a control unit as separate devices, the head unit including the detection device, the control unit including the operation device, wherein the two devices supplies and receives information via a communication device.

8. The sensor according to claim 7, wherein the communication device includes a communication cable connected to the control unit via a connector, and the control unit is provided with a plurality of connectors to be connected to a plurality of head units.

9. The sensor according to any one of claims 5 to 8, **characterized by** comprising a mode selection switch, the mode selection switch capable of selecting either of a teaching mode wherein the sampling is performed and a detection mode wherein the processing program for detecting the condition of the flow path is executed by the operation device.

10. The sensor according to any one of claims 5 to 9, comprising a temperature measurement device that detects a temperature of the fluid,
wherein the processing program has the operation device execute the processing to detect the condition of the flow path from a relation between the pressure, the flow rate, and the temperature.

11. The sensor according to any one of claims 1 to 3, comprising a head unit and a control unit, the head unit including the detection device, the control unit including the detection device,
wherein the detected object is a fluid, the physical quantity is the pressure, the flow rate, and the temperature of the fluid, and the sensor detects the condition in the flow path of the fluid,
the sensor being **characterized in that** the processing program has the operation device execute processing to detect the condition of the flow path based on a comparison of sampling data with detection data, the sampling data showing a relation between the pressure, the flow rate, and the temperature of the fluid, the sampling data being obtained by sampling of the pressure, the flow rate, and the temperature of the fluid before the condition of the flow path is detected, the detection data showing a relation between the pressure, the flow rate, and the temperature of the fluid when the condition is detected.

12. The sensor according to claim 11, being **characterized in that** the processing program has the operation device execute the processing to detect the condition of the flow path based on a comparison of a gradient between the pressure, the flow rate, and the temperature of the fluid in the sampling data with a gradient between the pressure, the flow rate, and the temperature of the fluid in the detected data.

13. A program storage unit that is connected to a sensor that detects a physical quantity of each of detected objects, and thereby is capable of transmitting information,
being **characterized by** comprising a program storage device that stores a processing program for executing processing of an operation device in the sensor with correspondence with the physical quantity for the each of the detected objects, wherein the program storage unit is connected to the sensor, and thereby the processing program stored in the program storage device is read out and transmitted to the sensor.

14. A control unit capable of being connected to a head unit, the head unit including a detection device that outputs a detection signal that depends on a physical quantity of a detected object, the control unit comprising:
a storage device capable of storing a processing program;
an operation device that executes processing in accordance with the processing program and based on a detection signal outputted from the detection device; and
an external program input device capable of writing the processing program in the storage device from external.

15. A program storage medium, being **characterized by** storing a processing programs, the processing program being supplied to a sensor that includes an operation device that executes processing in accordance with the processing program stored in a storage device and based on a detection signal that depends on a variation of the physical quantity, the processing program includes a plurality of processing programs with correspondence for each object of a physical quantity, and
in accordance with a read order, at least one processing program of the plurality of processing programs is selected and supplied to the sensor.

16. A program storage medium, being **characterized by** storing a processing program, the processing program being supplied to a sensor that includes an operation device that executes processing in accordance with a processing program stored in a storage device and based on a detection signal that depends on a variation of the physical quantity, and
the processing program is stored as a program that corresponds to a single application that is selected from a plurality of processing programs.
